# EUROPEAN PATENT APPLICATION

(11) **EP 2 114 015 A1**
(43) Date of publication of application: **04.11.2009**
(21) Application number: 08155450.3
(22) Date of filing: 30.04.2008
(51) Int. Cl.: H04B 1/10

(54) **An integrated circuit device for fm reception and transmission, an antenna device, an fm transceiver device and a portable radio communication device comprising such an integrated circuit device**

(71) Applicant: Laird Technologies AB, 164 22 Kista (SE)
(72) Inventor: Kaikkonen, Andrei, 175 48 Järfälla (SE); Braun, Christian, 186 47 Vallentuna (SE); Lindberg, Peter, 752 29, Uppsala (SE); Löfgren, Stefan, 181 63 Lidingö (SE)
(74) Representative: Dahnér, Christer

(57) **Abstract**

The present invention relates to an integrated circuit device (1; 21; 31; 41) for a portable radio communication device, comprising a low noise amplifier (2) for FM radio signals, switching means (3, 4) and at least a first, a second and a third port, wherein the low noise amplifier (2) is arranged to amplify signals between the first port and the second port, and the switching means (3, 4) is arranged to alternatively connect the first port to the second port or to the third port.

## Description

### FIELD OF INVENTION

The present invention relates generally to integrated circuit devices, and particularly to an integrated circuit devices for a portable radio communication device having an FM transceiver.

### BACKGROUND

The market for portable radio communication devices, such as mobile phones, PDA, portable computers and similar devices, is today very competitive, which puts tough demands on the manufacturers. A feature that more and more often is included in portable radio communication devices is FM radios, which added feature puts further demands on the manufacturers.

### SUMMARY OF THE INVENTION

An object of the present invention is to provide an integrated circuit device which efficiently supports multiple FM antenna functions for a portable radio communication device including an FM transceiver.

This object, among others, is according to the present invention attained by an integrated circuit device for FM reception and transmission, an antenna device comprising such an integrated circuit, an FM transceiver device and a portable radio communication device comprising such devices, respectively, as defined by the appended claims.

By providing an integrated circuit device for a portable radio communication device, comprising a low noise amplifier for FM radio signals, switching means and at least a first, a second and a third port, wherein the low noise amplifier is arranged to amplify signals between the first port and the second port, and the switching means is arranged to alternatively connect the first port to the second port or to the third port, an integrated circuit device is achieved which efficiently supports multiple FM antenna functions for a portable radio communication device including an FM transceiver.

By preferably providing the switching means to comprise a first and a second switch, wherein the low noise amplifier is connected to the first port and to the second port, wherein the first switch is connected to the first port and to the second port, the second switch is connected to the first port and to the third port, the second switch is configured to connect the first port to the third port when a first control signal indicates that an FM transmitter connected to the third port is operating, the first switch is configured to directly connect the first port to the second port when a second control signal indicates that an FM receiver connected to the second port receives signals with a strength above a threshold, the low noise amplifier can be bypassed when not needed to save power.

By preferably configuring the low noise amplifier to be on when the FM receiver indicates that signals are received with a strength below the threshold and to be off when the FM receiver indicates that signals are received with a strength above the threshold, further power can be saved.

By preferably providing the switching means to comprise a first and a second switch, wherein the low noise amplifier is connected to the first port and to the first switch, the first switch is connected to the low noise amplifier and to the second port, the second switch is connected to the first port and to the third port, wherein the second switch is configured to connect the first port to the third port when the first switch is configured to disconnect the second port from the first port, the transmitter does not risk providing undesired power into the receiver.

The low noise amplifier is preferably configured with a feed-back coupling in order to provide a desired function.

The integrated circuit device is preferably provided with switching means comprising a switch, wherein the low noise amplifier is connected to the first port and to the third port, the switch is connected to the first port, to the low noise amplifier and to the third port, wherein the switch is configured to connect the first port to the third port when a control signal indicates that an FM transmitter connected to the third port is operating, and is configured to otherwise connect the first port to the low noise amplifier, a very simple configuration is achieved. The integrated circuit device is preferably further provided with another switch connected between the low noise amplifier and the second port, and configured to disconnect the low noise amplifier from the second port when it is indicated that an external earpiece is connected to an FM receiver connected to the second port.

Further, the integrated circuit device is preferably provided with a fourth and a fifth port configured to be connected to an ESD protection device and arranged to protect the low noise amplifier from undesired ESD pulses.

By preferably providing the switching means to comprise a first and a second switch, wherein the low noise amplifier is connected to the first port and to the first switch, the first switch is connected to the low noise amplifier and to the second port, the second switch is connected to the first port and to the third port, wherein the second switch is configured to connect the first port to the third port when a first control signal indicates that an FM transmitter connected to the third port is operating, the first switch is configured to disconnect the first port from the second port when a second control signal indicates that an external earpiece is connected to an FM receiver connected to the second port.

Further features and advantages of the present invention will be evident from the following description.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:
Fig. 1 schematically illustrates functionality of a first embodiment of the present invention.
Fig. 2 schematically illustrates functionality of a second embodiment of the present invention.
Fig. 3 schematically illustrates functionality of a third embodiment of the present invention.
Fig. 4 schematically illustrates functionality of a fourth embodiment of the present invention.

### DETAILED DESCRIPTION OF EMBODIMENTS

In the following description, for purpose of explanation and not limitation, specific details are set forth, such as particular techniques and applications in order to provide a thorough understanding of the present invention. However, it will be apparent for a person skilled in the art that the present invention may be practiced in other embodiments that depart from these specific details. In other instances, detailed description of well-known methods and apparatuses are omitted so as not to obscure the description of the present invention with unnecessary details.

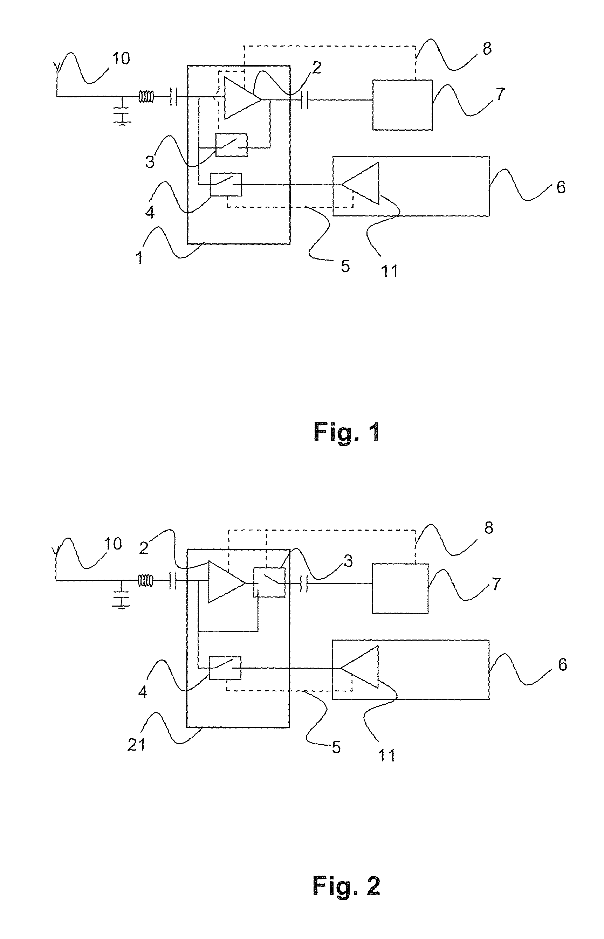

An integrated circuit device according to a first embodiment of the present invention will now be described with reference to Fig. 1.

The integrated circuit device 1 is designed for use in a portable radio communication device, such as a mobile phone, a PDA, a portable computer and similar devices. The integrated circuit device comprises a low noise amplifier 2 for FM radio signals, switching means 3, 4 and at least a first, a second and a third port. The low noise amplifier 2 is arranged to amplify signals between the first port and the second port, and the switching means 3, 4 is arranged to alternatively connect the first port to the second port or to the third port.

The switching means according to the first embodiment of the present invention comprises a first 3 and a second 4 switch, wherein the low noise amplifier 2 is connected to the first port and to the second port. The first switch 3 is connected to the first port and to the second port. The second switch 4 is connected to the first port and to the third port, wherein the second switch 4 is configured to connect the first port to the third port when a first control signal 5 indicates that an FM transmitter 6 connected to the third port is operating, and the first switch 3 is configured to directly connect the first port to the second port when a second control signal 8 indicates that an FM receiver 7 connected to the second port receives signals with a strength above a threshold. The first port is configured to be connected to an FM antenna 10, which is in-built in the portable radio communication device. Even if an in-built FM antenna 10 is used for transceiving FM signals the same integrated circuit device 1 correctly handles the connection of an external FM antenna, and/or external earpiece or headset, instead of, or parallel with, the in-built FM antenna.

The low noise amplifier 2 is preferably configured to be on when the FM receiver 7 indicates 8 that signals are received with a strength below the threshold and is configured to be off when the FM receiver 7 indicates 8 that signals are received with a strength above the threshold. The control signal is e.g. configured to keep the low noise amplifier 2 on with a 2.8 Volt application, and to keep the low noise amplifier 2 off with a 0 Volt application. The same signals are preferably used to control the first switch 3. In this way current is only consumed when it is needed for improved reception and the FM receiver can be prevented from saturation by strong signals.

An antenna device for a portable radio communication device preferably comprises the integrated circuit device 1 and the FM antenna 10. Alternatively, an FM transceiver device for a portable radio communication device comprises the integrated circuit device 1, the FM transmitter 6 and the FM receiver 7. Further, a portable radio communication device comprises the integrated circuit device 1, the in-built FM antenna 10, the FM transmitter 6 and the FM receiver 7.

An integrated circuit device according to a second embodiment of the present invention will now be described with reference to Fig. 2.

The integrated circuit device 21 is designed for use in a portable radio communication device, such as a mobile phone, a PDA, a portable computer and similar devices. The integrated circuit device 21 comprises a low noise amplifier 2 for FM radio signals, switching means 3, 4 and at least a first, a second and a third port. The low noise amplifier 2 is arranged to amplify signals between the first port and the second port, and the switching means 3, 4 is arranged to alternatively connect the first port to the second port or to the third port.

The switching means according to the second embodiment of the present invention comprises a first 3 and a second 4 switch, wherein the low noise amplifier 2 is connected to the first port and to the first switch 1. The first switch 1 is connected to the low noise amplifier 2, to the first port and to the second port. The second switch 4 is connected to the first port and to the third port, wherein the second switch 4 is configured to connect the first port to the third port when the first switch 3 is configured to disconnect the second port from the first port.

The first switch 3 is preferably configured to by-pass the low noise amplifier 2 when an FM receiver 7 connected to the second port indicates 8 that signals are received with a strength above a threshold, by directly connecting the first port to the second port, and is configured to connect the low noise amplifier 2 to the second port when the second control signal 8 indicates that the FM receiver 7 receives signals with a strength below the threshold. The first port is configured to be connected to an FM antenna 10, which is in-built in the portable radio communication device. Even if an in-built FM antenna 10 is used for transceiving FM signals the same integrated circuit device 1 correctly handles the connection of an external FM antenna, and/or external earpiece or headset, instead of, or parallel with, the in-built FM antenna.

The low noise amplifier 2 is preferably configured to be on when the FM receiver 7 indicates 8 that signals are received with a strength below the threshold and is configure to be off when the FM receiver 7 indicates 8 that signals are received with a strength above the threshold. The control signal is e.g. configured to keep the low noise amplifier 2 on with a 2.8 Volt application, and to keep the low noise amplifier 2 off with a 0 Volt application. The same signals are preferably used to control the first switch 3. In this way current is only consumed when it is needed for improved reception and the FM receiver can be prevented from saturation by strong signals.

An antenna device for a portable radio communication device preferably comprises the integrated circuit device 21 and the FM antenna 10. Alternatively, an FM transceiver device for a portable radio communication device comprises the integrated circuit device 21, the FM transmitter 6 and the FM receiver 7. Further, a portable radio communication device comprises the integrated circuit device 21, the in-built FM antenna 10, the FM transmitter 6 and the FM receiver 7.

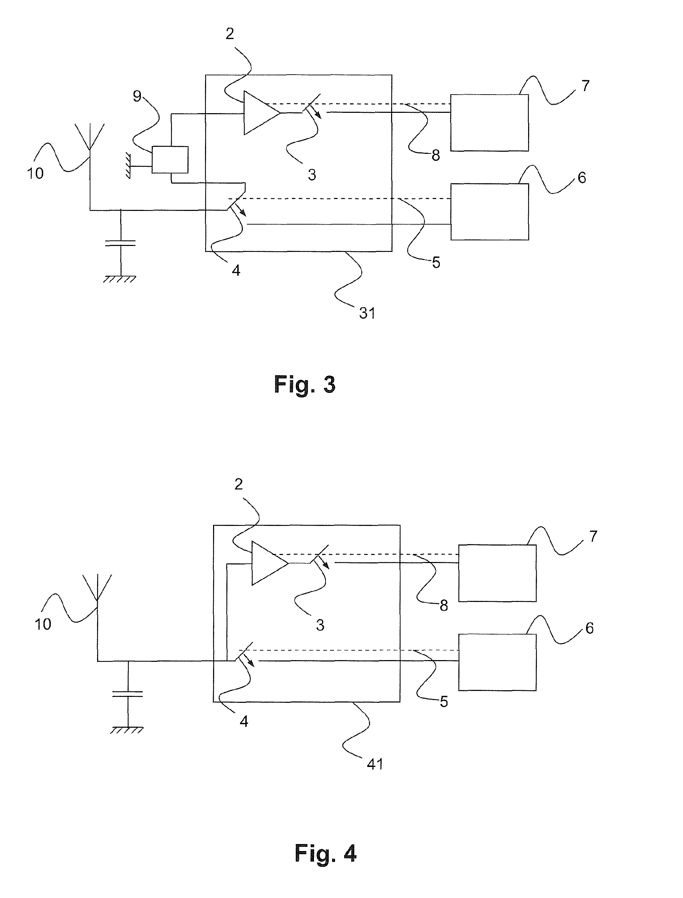

An integrated circuit device according to a third embodiment of the present invention will now be described with reference to Fig. 3.

The integrated circuit device 31 is designed for use in a portable radio communication device, such as a mobile phone, a PDA, a portable computer and similar devices. The integrated circuit device 31 comprises a low noise amplifier 2 for FM radio signals, switching means 3, 4 and at least a first, a second and a third port. The low noise amplifier 2 is arranged to amplify signals between the first port and the second port, and the switching means 3, 4 is arranged to alternatively connect the first port to the second port or to the third port.

The switching means according to the third embodiment of the present invention comprises a switch 4, wherein the low noise amplifier 2 is connected to the first port and to the third port, the switch 4 is connected to the first port, to the low noise amplifier 2 and to the third port, wherein the switch 4 is configured to connect the first port to the third port when a control signal 5 indicates that an FM transmitter 6 connected to the third port is operating, and is configured to otherwise connect the first port to the low noise amplifier 2.

The integrated circuit device 31 preferably comprises another switch 3, wherein the low noise amplifier 2 is connected to a first switch 3 instead of being connected to the second port. The first switch 3 is configured to disconnect the second port from the low noise amplifier 2 when it is indicated that an external earpiece or head set is connected to an FM receiver 7 connected to the second port.

Further, the integrated circuit device 31 preferably comprises a fourth and a fifth port configured to be connected to an Electrostatic Discharge (ESD) protection device 9 and arranged to protect the low noise amplifier 2 from undesired ESD pulses. A second switch 4 is connected to the fourth port instead of directly to the low noise amplifier 2, and the low noise amplifier 2 is connected to the fifth port instead of directly to the second switch 4.

An antenna device for a portable radio communication device preferably comprises the integrated circuit device 31 and the FM antenna 10. Alternatively, an FM transceiver device for a portable radio communication device comprises the integrated circuit device 31, the FM transmitter 6 and the FM receiver 7. Further, a portable radio communication device comprises the integrated circuit device 31, the in-built FM antenna 10, the FM transmitter 6 and the FM receiver 7.

An integrated circuit device according to a fourth embodiment of the present invention will now be described with reference to Fig. 4.

The integrated circuit device 41 is designed for use in a portable radio communication device, such as a mobile phone, a PDA, a portable computer and similar devices. The integrated circuit device 41 comprises a low noise amplifier 2 for FM radio signals, switching means 3, 4 and at least a first, a second and a third port. The low noise amplifier 2 is arranged to amplify signals between the first port and the second port, and the switching means 3, 4 is arranged to alternatively connect the first port to the second port or to the third port.

The switching means according to the fourth embodiment of the present invention comprises a first 3 and a second 4 switch, wherein the low noise amplifier 2 is connected to the first port and to the first switch 3, the first switch 3 is connected to the low noise amplifier 2 and to the second port, the second switch 4 is connected to the first port and to the third port, wherein the second switch 4 is configured to connect the first port to the third port when a first control signal 5 indicates that an FM transmitter 6 connected to the third port is operating. The first switch 3 is configured to disconnect the first port from said second port when a second control signal 8 indicates that an external earpiece or head set is connected to an FM receiver 7 connected to the second port.

The low noise amplifier 2 is preferably further configured to be on when the FM receiver 7 indicates 8 that signals are received with a strength below a threshold and is configure to be off when the FM receiver 7 indicates that signals are received with a strength above the threshold.

An antenna device for a portable radio communication device preferably comprises the integrated circuit device 41 and the FM antenna 10. Alternatively, an FM transceiver device for a portable radio communication device comprises the integrated circuit device 41, the FM transmitter 6 and the FM receiver 7. Further, a portable radio communication device comprises the integrated circuit device 41, the in-built FM antenna 10, the FM transmitter 6 and the FM receiver 7.

In all embodiments described above an on/off switch could e.g. be a diode(s), a FET device(s) or a MEMS device(s), a two way switch could e.g. be a diode(s), a FET device(s) or a MEMS device(s), and a three way switch could e.g. be a diode(s), a FET device(s) or a MEMS device(s).

It will be obvious that the present invention may be varied in a plurality of ways. Such variations are not to be regarded as departure from the scope of the present invention as defined by the appended claims. All such variations as would be obvious for a person skilled in the art are intended to be included within the scope of the present invention as defined by the appended claims.

## Claims

1. An integrated circuit device (1; 21; 31; 41) for a portable radio communication device, **characterized in that** it comprises a low noise amplifier (2) for FM radio signals, switching means (3, 4) and at least a first, a second and a third port, wherein said low noise amplifier (2) is arranged to amplify signals between said first port and said second port, and said switching means (3, 4) is arranged to alternatively connect said first port to said second port or to said third port.

2. The integrated circuit device (1) as claimed in claim 1, wherein said switching means comprises a first (3) and a second (4) switch, wherein said low noise amplifier (2) is connected to said first port and to said second port, said first switch (3) is connected to said first port and to said second port, said second switch (4) is connected to said first port and to said third port, wherein said second switch (4) is configured to connect said first port to said third port when a first control signal (5) indicates that an FM transmitter (6) connected to said third port is operating, said first switch (3) is configured to directly connect said first port to said second port when a second control signal (8) indicates that an FM receiver (7) connected to said second port receives signals with a strength above a threshold.

3. The integrated circuit device as claimed in claim 2, wherein said low noise amplifier (2) is configured to be on when the FM receiver (7) indicates (8) that signals are received with a strength below said threshold and is configure to be off when the FM receiver (7) indicates (8) that signals are received with a strength above said threshold.

4. The integrated circuit device (21) as claimed in claim 1, wherein said switching means comprises a first (3) and a second (4) switch, wherein said low noise amplifier (2) is connected to said first port and to said first switch (3), said first switch (3) is connected to said low noise amplifier (2), to said first port and to said second port, said second switch (4) is connected to said first port and to said third port, wherein said second switch (4) is configured to connect said first port to said third port when said first switch (3) is configured to disconnect said second port from said first port.

5. The integrated circuit device (21) as claimed in claim 4, comprising a by-pass for said low noise amplifier (2).

6. The integrated circuit device (21) as claimed in claim 4 or 5, wherein said first switch (3) is configured to directly connect said first port to said second port when a second control signal (8) indicates that an FM receiver (7) connected to said second port receives signals with a strength above a threshold, and is configured to connect said low noise amplifier (2) to said second port when the second control signal (8) indicates that the FM receiver (7) receives signals with a strength below the threshold.

7. The integrated circuit device (31) as claimed in claim 1, wherein said switching means comprises a switch (4), wherein said low noise amplifier (2) is connected to said first port and to said third port, said switch (4) is connected to said first port, to said low noise amplifier (2) and to said third port, wherein said switch (4) is configured to connect said first port to said third port when a control signal (5) indicates that an FM transmitter (6) connected to said third port is operating, and is configured to otherwise connect said first port to said low noise amplifier (2).

8. The integrated circuit device (31) as claimed in claim 1, wherein said switching means comprises a first (3) and a second (4) switch, wherein said low noise amplifier (2) is connected to said first port and to said first switch (3), said second switch (4) is connected to said first port, to said low noise amplifier (2) and to said third port, wherein said second switch (4) is configured to connect said first port to said third port when a control signal (5) indicates that an FM transmitter (6) connected to said third port is operating, and is configured to otherwise connect said first port to said low noise amplifier (2), and said first switch (3) is configured to disconnect said second port from said low noise amplifier (2) when it is indicated that an external earpiece is connected to an FM receiver (7) connected to said second port.

9. The integrated circuit device as claimed in claim 7 or 8, comprising a fourth and a fifth port configured to be connected to an ESD protection device (9) and arranged to protect said low noise amplifier (2) from undesired ESD pulses.

10. The integrated circuit device (41) as claimed in claim 1, wherein said switching means comprises a first (3) and a second (4) switch, wherein said low noise amplifier (2) is connected to said first port and to said first switch (3), said first switch (3) is connected to said low noise amplifier (2) and to said second port, said second switch (4) is connected to said first port and to said third port, wherein said second switch (4) is configured to connect said first port to said third port when a first control signal (5) indicates that an FM transmitter (6) connected to said third port is operating, said first switch (3) is configured to disconnect said first port from said second port when a second control signal (8) indicates that an external earpiece is connected to an FM receiver (7) connected to said second port.

11. An antenna device comprising an integrated circuit device as claimed in any of claims 1-10.

12. An FM transceiver device comprising an integrated circuit device as claimed in any of claims 1-10.

13. A portable radio communication device **characterized in that** is comprises an integrated circuit device as claimed in any of claims 1-10.
